# EUROPÄISCHE PATENTSCHRIFT

(11) **EP 1 638 036 B1**
(45) Veröffentlichungstag und Bekanntmachung des Hinweises auf die Patenterteilung: **20.02.2008**
(21) Anmeldenummer: 05019548.6
(22) Anmeldetag: 08.09.2005
(51) Int. Cl.: G06K 7/00

(54) **Schreib-/Lesestation eines RFID-Systems sowie Verfahren zur Ermittlung und Einstellung eines optimalen Sendekanals und einer optimalen Sendeleistung von Schreib-/Lesestationen in einem RFID-System**
RFID reader and method for evaluation and adjustment the transmitting channel and power
RFID lecteur et méthode pour déterminer et ajuster le canal et la puissance d'émission

(30) Priorität: 20.09.2004 DE 102004045918
(43) Veröffentlichungstag der Anmeldung: 22.03.2006
(73) Patentinhaber: Feig Electronic GmbH, 35781 Weilburg-Waldhausen (DE)
(72) Erfinder: Walk, Eldor, 65558 Heistenbach (DE)
(74) Vertreter: Knefel, Cordula

(56) Entgegenhaltungen:
- US-A- 4 737 790
- US-A- 5 347 280

## Beschreibung

Die Erfindung betrifft eine Schreib-/Lesestation eines RFID-Systems sowie ein Verfahren zur Ermittlung und Einstellung eines optimalen Sendekanals und einer optimalen Sendeleistung von Schreib-/Lesestationen in einem RFID-System.

Werden gemäß dem Stand der Technik mehrere Schreib-/Lesestationen in räumlicher Nähe zueinander betrieben, kann eine negative Beeinflussung des Empfangsverhaltens einer benachbarten Schreib- / Lesestation durch die von den ersten Schreib-/Lesestationen ausgesendeten elektromagnetischen Signalen hervorgerufen werden.

Abhängig von der Trägerfrequenz, der Antennen-Charakteristik, der Sendeleistung und der räumlichen Gegebenheiten kann aber auch der Betrieb einer Schreib-/Lesestation in einem bestimmten ungünstigen Umfeld negativ beeinflusst werden, weil die von der Schreib-/Lesestation ausgesendeten elektromagnetischen Signale im räumlichen Umfeld reflektiert werden und mit dem ursprünglich ausgesendeten Signal überlagert von der Schreib-/Lesestation wieder empfangen werden.

Besonders wenn mehrere in räumlicher Nähe zueinander befindliche Schreib-/Lesestationen in einem definierten Frequenzband aber auf unterschiedlichen Frequenzen ihre elektromagnetischen Signale aussenden, kann durch Reflexion und Überlagerung der Sendesignale eine negative Beeinflussung einzelner Schreib-/Lesestationen hervorgerufen werden.

Im praktischen Alltag werden zur Analyse der oben beschriebenen Probleme gesonderte Messgeräte notwendig, die das in der Umgebung der Schreib-/Lesestation empfangene Frequenzspektrum aufnehmen und anzeigen können. Bei diesen Messgeräten kann es sich beispielsweise um Messgeräte für die Amplitude und/oder Phasenlage einer Frequenz oder eines Frequenzspektrums handeln, dessen Bedienung eine gewisse Qualifikation des Bedienpersonals voraussetzt, die außerdem relativ teuer sind und die zusätzlich vom Inbetriebnehmer mitgebracht werden müssen. Aus den so ermittelten Messwerten muss der Inbetriebnehmer dann durch manuelle Einstellung der Schreib-/Lesestation die Betriebsparameter bestimmen, die einen Betrieb des RFID-Systems unter den vorgegebenen Randbedingungen ermöglichen. Zur Durchführung dieser Arbeiten ist eine Vielzahl an zeitaufwändigen Messreihen mit unterschiedlichen Betriebsparametern der Schreib-/Lesestationen notwendig.

Zum Stand der Technik (US-A 4,737,790 und US-A 5,347,280) gehören Schreib-/Lesestationen, die mit Transpondern kommunizieren. Diese zum Stand der Technik gehörenden Schreib-/Lesestationen weisen den Nachteil auf, dass, wenn mehrere Schreib-/Lesestationen einen Sendekanal belegen und gleichzeitig senden, Störungen auftreten, die die Zuverlässigkeit der Kommunikation zwischen Schreib-/Lesestation und Transponder negativ beeinflussen können.

Das der Erfindung zugrunde liegende technische Problem besteht darin, eine Schreib-/Lesestation anzugeben, mit der es möglich ist, mögliche negative Beeinflussungen der Schreib-/Lesestation durch die Schreib-/Lesestation selbst anzeigbar zu machen und manuelle oder automatisierte Einstellhilfen zu integrieren, die die Inbetriebnahme und Einstellung einer Schreib-/Lesestation erleichtern und beschleunigen, ohne dass hierzu weitere Messgeräte notwendig sind. Darüber hinaus soll ein Verfahren zur Ermittlung und Einstellung eines optimalen Sendekanals und einer optimalen Sendeleistung von Schreib-/Lesestationen in einem RFID-System angegeben werden.

Dieses technische Problem wird durch eine Schreib-/Lesevorrichtung mit den Merkmalen gemäß Anspruch 1 und durch ein Verfahren mit den Merkmalen gemäß Anspruch 11 und 12 gelöst.

Gelöst wird dieses technische Problem dadurch, dass die erfindungsgemäße Schreib-/Lesestation über eine Empfangseinheit verfügt, die in der Lage ist, ein breites Empfangsband zu empfangen, und eine Vorrichtung zur Auswertung der empfangenen Signale hinsichtlich der Frequenzen und Amplitude aufweist und zusätzliche Einrichtungen aufweist, mit deren Hilfe die so ermittelten Werte der empfangenen Signale angezeigt werden können. Ferner verfügt die Schreib-/Lesestation über Einrichtungen zur Einstellung des Sendekanals und/oder der Sendefrequenz und/oder der Sendeleistung.

Die Erfindung ist für solche RFID-Systeme besonders vorteilhaft, bei denen ein vorgegebenes Frequenzband in eine Reihe von diskreten Sende-/Empfangskanälen innerhalb des Frequenzbandes unterteilt ist, und bei denen es möglich ist, der Schreib-/Lesestation innerhalb des vorgegebenen Frequenzbandes einen oder mehrere mögliche Sende-/Empfangskanäle vorzugeben, auf denen sie mit einem oder mehreren Transpondern kommunizieren kann.

Die Erfindung betrifft also eine Schreib-/Lesestation für ein RFID-System mit wenigstens einem Kanal zur Kommunikation zwischen einer Schreib-/Lesestation und wenigstens einem Transponder, wobei die Schreib-/Lesestation in einem Frequenzbereich mit mehreren Sendekanälen arbeiten kann, wodurch es ermöglicht wird, dass beim Betrieb von mehreren Schreib-/Lesestationen in verschiedenen Sendekanälen jede Schreib-/Lesestation einen freien Kanal zum Senden nutzen kann und keine oder nur tolerierbare Störungen auf den Sende- und Empfangskanälen anderer Schreib-/Lesestationen verursacht werden, und ein Verfahren zur Ermittlung und Einstellung des optimalen Sendekanals und der optimalen Sendeleistung von Schreib-/Lesestationen in einem RFID-System.

Weiterhin betrifft die Erfindung eine Vorrichtung, die alle belegten Sendekanäle in einem Frequenzband ermittelt und zur Anzeige bringt, damit bei Inbetriebnahme und Wartungsarbeiten an der Schreib-/Lesestation eine effiziente Umgebungsanalyse bezüglich bereits anderweitig belegter Sende-/Empfangskanäle und hinsichtlich negativer Beeinflussungen der Schreib-/Lesestation durch räumliche Gegebenheiten ohne Hinzunahme zusätzlicher Messgeräte durchgeführt werden kann.

Durch die vorteilhaft automatisch durchgeführte Änderung des Sendekanals und/oder durch Änderung der Sendeleistung der Schreib-/Lesestation kann eine Reduzierung der negativen Beeinflussung erzielt werden.

Gemäß einer vorteilhaften Ausführungsform der Erfindung sind die Empfangseinheit und Analyseeinheit als getrennte Einheiten innerhalb der Schreib-/Lesestation ausgebildet.

Es ist jedoch auch möglich, gemäß einer besonders bevorzugten Ausführungsform der Erfindung die Empfangseinheit gleichzeitig als Analyseeinheit zu verwenden. Hierdurch reduziert sich der technische Aufwand der Schreib-/Lesestation.

Vorteilhaft weist die Sendeeinheit einen steuerbaren Frequenzgeber und einen steuerbaren Leistungsverstärker auf, mit dem die Sendefrequenz und die Sendeleistung der Sendeeinheit variiert werden können. Dies hat den Vorteil, dass die Schreib-/Lesestation im Falle einer Störung durch andere Sender oder durch räumliche Gegebenheiten so eingestellt werden kann, dass sie durch Änderung des Sendekanals und/oder der Sendeleistung in einem Frequenzband arbeitet, auf dem die Störungen keinen oder nur noch einen tolerierbaren Einfluss auf das Empfangsverhalten der Schreib-/Lesestation haben.

Gemäß einer weiteren vorteilhaften Ausgestaltung der Erfindung können der Frequenzgeber und der Leistungsverstärker der Sendeeinheit sowie die Analyseeinheiten über eine Schnittstelle gesteuert und abgefragt werden.

Vorteilhaft ist die Schnittstelle an eine externe Anzeigeeinrichtung angeschlossen.

Gemäß einer weiteren vorteilhaften Ausführungsform der Erfindung ist die Anzeigeeinrichtung in der Schreib-/Lesestation integriert, um zusätzlichen Aufwand zu vermeiden.

Vorteilhaft kann die Auswerte- und Steuereinheit den Frequenzgeber und den Leistungsverstärker der Sendeeinheit sowie die Analyseeinheiten wenigstens einer weiteren Schreib-/Lesestation abfragen und steuern.

Weitere Merkmale und Vorteile der Erfindung ergeben sich anhand der zugehörigen Zeichnungen, in denen Ausführungsbeispiele des erfindungsgemäßen Verfahrens sowie die erfindungsgemäße Schreib-/Lesestation beispielhaft dargestellt sind, und zwar zeigen:
- Fig. 1: ein Frequenzdiagramm mit einem Sender auf einem Kanal;
- Fig. 2: ein Frequenzdiagramm mit mehreren belegten Kanälen;
- Fig. 3: eine Ausführungsform der erfindungsgemäßen Schreib-/Lesestation mit getrennter Empfangs- und Analyseeinheit;
- Fig. 4: eine Schreib-/Lesestation mit in die Empfangseinheit integrierter Analyseeinheit;
- Fig. 5: eine Schreib-/Lesestation mit integrierter Anzeigevorrichtung;
- Fig. 6: eine Ausführungsform der Sendeeinheit mit steuerbarer Frequenz und Sendeleistung;
- Fig. 7: ein System aus mehreren vernetzten Schreib-/Lesestationen.

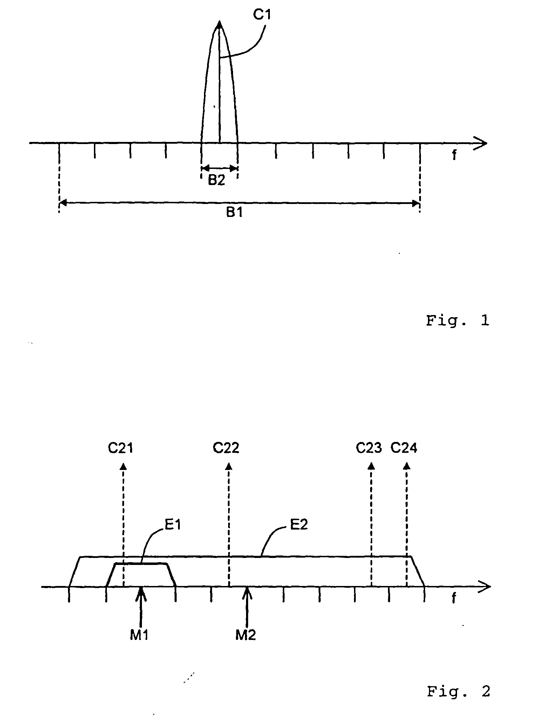

Fig. 1 zeigt ein Frequenzdiagramm mit einem belegten Kanal (C1). Das komplette Frequenzband (B1) ist in mehrere Kanäle unterteilt, die je eine Kanalbandbreite (B2) aufweisen.

Fig. 2 zeigt beispielhaft ein Frequenzdiagramm, das das Abhören der Kanäle darstellt. Die Kanäle (C21, C22, C23, C24) stellen die Sender anderer Systeme dar, die auf jeweils verschiedenen Kanälen arbeiten. Mittels einer Transformation des demodulierten Empfangssignales in den Frequenzbereich, zum Beispiel durch eine Fast-FourierTransformation (FFT) oder eine komplexe FFT, werden die einzelnen Kanäle analysiert, ohne dass dazu jede Frequenz des zu analysierenden Kanals voreingestellt werden muss. Vielmehr ist es ausreichend, eine Frequenz, die vorteilhaft in einem Bereich um die Mitte des zu analysierenden Frequenzbandes liegt, als Referenzfrequenz vorzugeben.

Der Einsatz einer komplexen FFT ist besonders vorteilhaft, weil das Ergebnis dieses Verfahrens, welches den Realteil und Imaginärteil des Empfangssignales auswertet, neben dem Abstand der empfangenen Frequenzen von der Referenzfrequenz auch ein Vorzeichen enthält, welches anzeigt, welche Frequenzen oberhalb und unterhalb der Referenzfrequenz im Empfangssignal enthalten sind.

Durch Variieren des Bandbereiches kann die Anzahl der gleichzeitig abgetasteten Kanäle eingestellt werden. Dazu wird die Frequenz (M1) zwischen zwei Kanäle gelegt und der Bandbereich auf die doppelte Kanalbandbreite (B2) eingestellt. Es ergibt sich ein Bandbereich (E1), der die links und rechts von der Frequenz (M1) liegenden Kanäle überspannt.

Liegt die Frequenz (M2) in einem Bereich nahe der Mitte des Frequenzbandes (B1) und ist der Bandbereich (E2) auf die Größe des Frequenzbandes (B1) eingestellt, können alle Kanäle im Frequenzband (B1) gleichzeitig erfasst und analysiert werden.

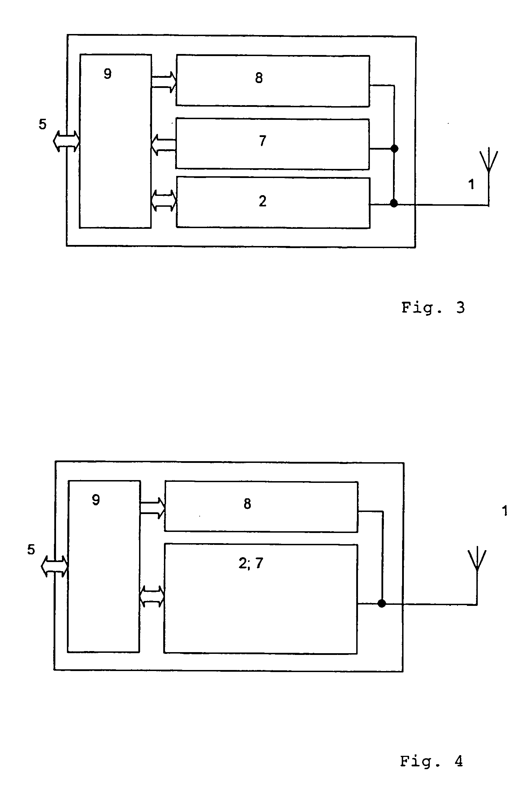

Fig. 3 zeigt eine Ausführungsform der erfindungsgemäßen Schreib-/Lesestation. In dieser Ausführungsform ist die Sende-/Empfangsantenne (1) mit einer Sendeeinheit (8), einer Empfangseinheit (7) und einer Analyseeinheit (2) verbunden. Ferner verfügt die Schreib-/Lesestation über eine Auswerte- und Steuereinheit (9), deren Aufgabe es ist, die über die Schnittstelle (5) empfangenen Daten aufzubereiten und an die Sendeeinheit (8) weiterzuleiten, die von der Empfangseinheit (7) empfangenen Daten eines Transponders zur Weitergabe über die Schnittstelle (5) vorauszuwerten und vorzubereiten und die von der Analyseeinheit (2) empfangenen Signale zu verarbeiten und ebenfalls für die Übertragung über die Schnittstelle (5) vorzubereiten.

Aufgabe der Analyseeinheit (2) ist es, die über die Antenne (1) empfangenen Signale hinsichtlich der empfangenen Frequenzen und dem Amplitudenbetrag dieser Frequenzen in einem zu analysierenden Frequenzband zu empfangen und an die Auswerteeinheit (9) weiterzuleiten, wobei es sich bei der Analyseeinheit (2) um eine Empfangseinheit mit großer Empfangsbandbreite handelt, bei der das Empfangsband und die Empfindlichkeit variiert werden können.

Fig. 4 stellt eine weitere Ausführungsform der erfindungsgemäßen Schreib-/Lesestation dar, wobei eine Empfangseinheit und eine Analyseeinheit eine gemeinsame Empfangs- und Analyseeinheit (2; 7) bilden. In dieser Ausführungsform kann die Empfangs- und Analyseeinheit (2; 7) von der Auswerte- und Steuereinheit (9) so eingestellt werden, dass sie optimal für den Empfang von Transponder-Daten, die über die Antenne (1) zugeführt werden, eingestellt ist oder als breitbandige Empfangseinheit arbeiten kann, um die von der Antenne (1) aufgefangenen Umgebungssignale zu empfangen und jeweils an die Auswerte- und Steuereinheit (9) weiterzuleiten.

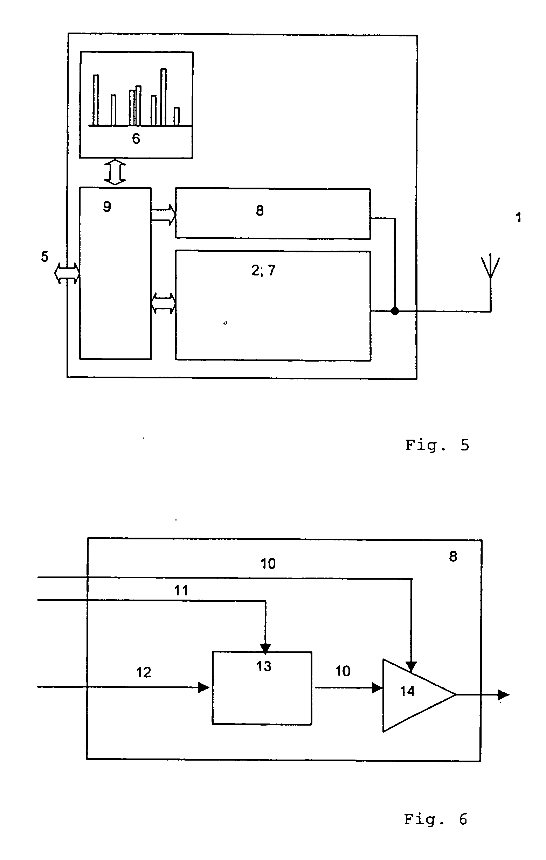

Fig. 5 zeigt eine Ausführungsform der erfindungsgemäßen Schreib-/Lesestation, bei der eine Anzeigevorrichtung (6) in die Schreib-/Lesestation integriert ist, die den Benutzer über die Ergebnisse der Analyseeinheit (2) informiert, so dass dieser schnell und einfach über die das Betriebsverhalten der Schreib-/Lesestation eventuell negativ beeinflussende Störfrequenzen informiert wird.

Die Anzeigevorrichtung (6) kann in einem einfachen Fall aus einer oder mehreren Leuchtdioden (LED) aufgebaut sein, oder es kann sich dabei um eine Anzeigeeinheit handeln, die über alphanumerische und/oder graphische Darstellungsmöglichkeiten verfügt.

Fig. 6 zeigt eine Detaildarstellung der Sendeeinheit (8), die aus einem Leistungsverstärker (14), dessen Verstärkung über das Steuersignal (10) reguliert werden kann, und einem Frequenzgeber (13), dessen Frequenz und damit Sendekanal über das Steuersignal (11) eingestellt werden kann, besteht. Die zu sendenden Daten gelangen über das Steuersignal (12) an den Frequenzgeber und modulieren das Sendesignal (15), welches über den Leistungsverstärker (14) an die hier nicht dargestellte Antenne (1) ausgegeben wird.

Die Möglichkeit zur Einstellung des Leistungsverstärkers (14) und des Frequenzgebers (13) in der erfindungsgemäßen Schreib-/Lesestation hat den Vorteil, dass die Schreib-/Lesestation im Falle einer Störung durch andere Sender oder durch räumliche Gegebenheiten so eingestellt werden kann, dass sie durch Änderung des Sendekanals und/oder der Sendeleistung in einem Frequenzband arbeitet, auf dem die Störungen keinen oder nur noch einen tolerierbaren Einfluss auf das Empfangsverhalten der Schreib-/Lesestation haben.

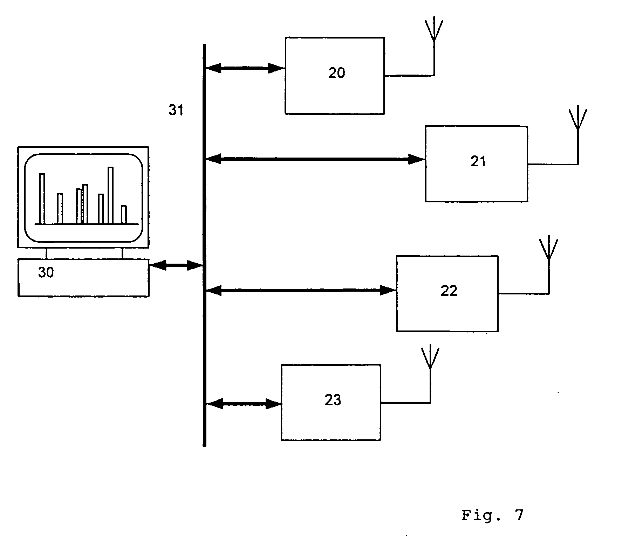

Fig. 7 zeigt ein RFID-System, bei dem mehrere erfindungsgemäße Schreib-/Lesestationen (20, 21, 22, 23) in räumlicher Nähe zueinander angeordnet und über einen Datenbus (31) mit einer Steuereinheit (30) vernetzt sind. Bei dieser Anordnung kann die Steuereinheit (30) die hier nicht dargestellten Sendeeinheiten, Empfangseinheiten und Analyseeinheiten der angeschlossenen Schreib-/Lesestationen (20, 21, 22, 23) ansteuern und abfragen. Aktiviert die Steuereinheit (30) die Sendeeinheit mindestens einer Schreib-/Lesestation (20, 21, 22, 23), erhält sie durch Abfragen der Analyseeinheiten der Schreib-/Lesestationen (20, 21, 22, 23) ein Ergebnis über die Beeinflussung aller Schreib-Lesestationen durch die Sender der mindestens einen aktiven Schreib-/Lesestation.

Durch iteratives Ändern der Sendeleistung und/oder des Sendekanals einer Schreib-/Lesestation und anschließendes Abfragen der Analyseeinheiten aller Schreib-/Lesestationen kann in einem derartig aufgebauten RFID-System die mögliche Beeinflussung der Schreib-/Lesestation in Abhängigkeit des Sendekanals und der Sendeleistung mindestens einer aktiven Schreib-/Lesestation ermittelt werden. Aus den Analyseergebnissen dieses Vorgangs kann die Steuereinheit (30) die optimale Sendeleistung und den Sendekanal für jede Scheib-/Lesestation bestimmen, bei denen eine gegenseitige Störung der Schreib-/Lesestationen (20, 21, 22, 23) auf ein Minimum reduziert ist.

In einer weiteren vorteilhaften Ausführungsform kann das in Fig. 7 dargestellte System auch ohne die Steuereinheit (30) aufgebaut werden. In diesem Fall übernimmt eine der Schreib-/Lesestationen (20, 21, 22, 23) die Aufgabe der Steuereinheit, wobei ihre Auswerte- und Steuereinheit (9) in der Lage ist, die Sendeeinheiten (8), Empfangseinheiten (7) und Analyseeinheiten (2) der angeschlossenen Schreib-/Lesestationen (20, 21, 22, 23) einschließlich ihrer eigenen anzusteuern und abzufragen.

### Bezugszahlen

- 1: Sende- und Empfangsantenne
- 2: Analyseeinheit
- 5: Schnittstelle
- 6: Anzeigeeinrichtung
- 7: Empfangseinheit
- 8: Sendeeinheit
- 9: Auswerte- und Steuereinheit
- 10: Steuersignal des Leistungsverstärkers (14)
- 11: Steuersignal des Frequenzgebers (13)
- 12: Datensignal für Sendedaten
- 13: Frequenzgeber
- 14: Leistungsverstärker
- 15: moduliertes Sendesignal
- 20, 21, 22, 23: Schreib-/Lesestationen
- 30: Steuereinheit
- 31: Datenbus
- C1: belegter Kanal
- C21: belegter Kanal (von anderer Schreib-/Lesestation)
- C22: belegter Kanal (von anderer Schreib-/Lesestation)
- C23: belegter Kanal (von anderer Schreib-/Lesestation)
- C24: belegter Kanal (von anderer Schreib-/Lesestation)
- E1: Bandbereich (zum Abhören von Kanälen)
- E2: Bandbereich (zum Abhören von Kanälen)
- M1: Frequenz zwischen zwei Kanälen
- M2: Frequenz zwischen zwei Kanälen
- B1: Frequenzband
- B2: Kanalbandbreite

## Patentansprüche

1. Schreib-/Lesestation eines RFID-Systems mit wenigstens einem wählbaren Kanal innerhalb eines Frequenzbandes zur Kommunikation zwischen der Schreib-/Lesestation und wenigstens einem Transponder, die wenigstens eine Sende- und Empfangsantenne (1) aufweist, die mit wenigstens einer Sendeeinheit (8) und mit wenigstens einer Empfangseinheit (7) verbunden ist, wobei die wenigstens eine Sendeeinheit (8) und die wenigstens eine Empfangseinheit (7) mit wenigstens einer Auswerte- und Steuereinheit (9) verbunden sind,
**dadurch gekennzeichnet,**
**dass** die Schreib-/Lesestation wenigstens eine Analyseeinheit (2) aufweist, wobei die wenigstens eine Analyseeinheit (2) als eine die von der Sende- und Empfangsantenne (1) empfangenen Signale innerhalb eines voreingestellten Frequenzbandes empfangende und hinsichtlich der empfangenen Frequenz und Amplitude auswertende und die so ausgewerteten Signale an die Auswerte- und Steuereinheit (9) übergebende Analyseeinheit (2) ausgebildet ist, und **dass** die Schreib-/Lesestation alle, auch von anderen Schreib-/Lesestationen belegten Sendekanäle im voreingestellten Frequenzband ermittelt und zur Anzeige bringt.

2. Schreib-/Lesestation nach Anspruch 1, **dadurch gekennzeichnet, dass** die Einheiten Empfangseinheit (7) und Analyseeinheit (2) als getrennte Einheiten innerhalb der Schreib-/Lesestation ausgebildet sind.

3. Schreib-/Lesestation nach Anspruch 1, **dadurch gekennzeichnet, dass** die Empfangseinheit (7) gleichzeitig als Analyseeinheit (2) ausgebildet ist.

4. Schreib-/Lesestation nach einem der Ansprüche 1 bis 3, **dadurch gekennzeichnet, dass** die Sendeeinheit (8) wenigstens einen steuerbaren Frequenzgeber (13) und wenigstens einen steuerbaren Leistungsverstärker (14) aufweist.

5. Schreib-/Lesestation nach einem der Ansprüche 1 bis 4, **dadurch gekennzeichnet, dass** der Frequenzgeber (13) und der Leistungsverstärker (14) der Sendeeinheit (8) und die Analyseeinheiten (2) über eine Schnittstelle (5) steuerbar und abfragbar sind.

6. Schreib-/Lesestation nach Anspruch 5, **dadurch gekennzeichnet, dass** über die Schnittstelle (5) eine externe Anzeigeeinrichtung anschließbar ist.

7. Schreib-/Lesestation nach einem der Ansprüche 1 bis 5, **dadurch gekennzeichnet, dass** eine Anzeigeeinrichtung (6) integriert ist.

8. Schreib-/Lesestation nach einem der Ansprüche 1 bis 7, **dadurch gekennzeichnet, dass** die Auswerte- und Steuereinheit (9) als eine den Frequenzgeber (13) und den Leistungsverstärker (14) der Sendeeinheit (8) und die Analyseeinheit (2) wenigstens einer weiteren Schreib-/Lesestation (20, 21, 22, 23) abfragende und steuernde Auswerte- und Steuereinheit ausgebildet ist.

9. Schreib-/Lesestation nach Anspruch 1, **dadurch gekennzeichnet, dass** die Schreib-/Lesestation als eine eine Änderung des Sendekanals und/oder der Sendeleistung automatisch durchführende Schreib-/Lesestation ausgebildet ist.

10. Schreib-/Lesestation nach Anspruch 1, **dadurch gekennzeichnet, dass** die Schreib-/Lesestation (20) an einer Steuereinheit (30) angeschlossen ist, und dass Sendeeinheiten, Empfangseinheiten und Analyseeinheiten der Schreib-/Lesestation (20) von der Steuereinheit (30) ansteuerbar und abfragbar ausgebildet sind.

11. Verfahren zur Ermittlung und Einstellung eines Sendekanals mit Schreib-/Lesestationen eines RFID-Systems mit den Merkmalen gemäß Anspruch 1, **dadurch gekennzeichnet, dass** eine Steuereinheit (30) einen Frequenzgeber (13) und einen Leistungsverstärker (14) der Sendeeinheit (8) der Schreib-/Lesestationen (20, 21, 22, 23) ansteuert, dass durch Abfragen der Analyseeinheit (2) der Schreib-/Lesestation (20, 21, 22, 23) die Beeinflussung der Schreib-/Lesestation durch den aktuell eingestellten Sendekanal und die Sendeleistung der mindestens einen aktiven Schreib-/Lesestation ermittelt wird, dass daraus die Sendeleistung und der Sendekanal für die Schreib-/Lesestation (20, 21, 22, 23) ermittelt werden, bei denen eine gegenseitige Störung der Schreib-/Lesestationen (20, 21, 22, 23) auf ein Minimum reduziert ist, und dass dieser Sendekanal und die Sendeleistung eingestellt werden.

12. Verfahren zur Ermittlung und Einstellung eines Sendekanals mit Schreib-/Lesestationen eines RFID-Systems mit den Merkmalen gemäß Anspruch 1, **dadurch gekennzeichnet, dass** die Auswerte- und Steuereinheit (9) einer Schreib-/Lesestation (20, 21, 22, 23) einen Frequenzgeber (13) und einen Leistungsverstärker (14) der Sendeeinheit (8) einer Schreib-/Lesestation (20, 21, 22, 23) ansteuert, dass durch Abfragen der Analyseeinheit (2) der Schreib-/Lesestation (20, 21, 22, 23) die Beeinflussung der Schreib-/Lesestation durch den aktuell eingestellten Sendekanal und die Sendeleistung der mindestens einen aktiven Schreib-/Lesestation ermittelt wird, und dass daraus die Sendeleistung und der Sendekanal für die Schreib-/Lesestation (20, 21, 22, 23) ermittelt werden, bei denen eine gegenseitige Störung der Schreib-/Lesestationen (20, 21, 22, 23) auf ein Minimum reduziert ist, und dass diese Sendeleistung und dieser Sendekanal eingestellt werden.

## Claims

1. A read/write station of an RFID system with at least one selectable channel within a frequency band for communication between the read/write station and at least one transponder having at least one transmitting and receiving antenna (1) which is connected to at least one transmitting unit (8) and at least one receiving unit (7), wherein the at least one transmitting unit (8) and the at least one receiving unit (7) are connected to at least one evaluation and control unit (9), **characterised in that** the read/write station has at least one analysis unit (2), wherein the at least one analysis unit (2) is formed as an analysis unit (2) which receives the signals received by the transmitting and receiving antenna (1) within a preset frequency band and evaluates them with respect to the received frequency and amplitude and delivers the thus evaluated signals to the evaluation and control unit (9), and **in that** the read/write station detects and displays all transmission channels also in use by other read/write stations within the preset frequency band.

2. A read/write station according to claim 1, **characterised in that** the receiving unit (7) and the analysis unit (2) are formed as separate units within the read/write station.

3. A read/write station according to claim 1, **characterised in that** the receiving unit (7) is simultaneously formed as an analysis unit (2).

4. A read/write station according to any one of claims 1 to 3, **characterised in that** the transmitting unit (8) has at least one controllable frequency transmitter (13) and at least one controllable power amplifier (14).

5. A read/write station according to any one of claims 1 to 4, **characterised in that** the frequency transmitter (13) and the power amplifier (14) of the transmitting unit (8) and the analysis units (2) can be controlled and interrogated via an interface (5).

6. A read/write station according to claim 5, **characterised in that** an external display device is connectable via the interface (5).

7. A read/write station according to any one of claims 1 to 5, **characterised in that** a display device (6) is integrated.

8. A read/write station according to any one of claims 1 to 7, **characterised in that** the evaluation and control unit (9) is formed as an evaluation and control unit which interrogates and controls the frequency transmitter (13) and the power amplifier (14) of the transmitting unit (8) and the analysis unit (2) of at least one further read/write station (20, 21, 22, 23).

9. A read/write station according to claim 1, **characterised in that** the read/write station is formed as a read/write station which automatically changes the transmission channel and/or the transmission power.

10. A read/write station according to claim 1, **characterised in that** the read/write station (20) is connected to a control unit (30) and **in that** transmitting units, receiving units and analysis units of the read/write station (20) are formed so that they can be controlled and interrogated by the control unit (30).

11. A method of detecting and setting a transmission channel by means of read/write stations of an RFID system with the features according to claim 1, **characterised in that** a control unit (30) controls a frequency transmitter (13) and a power amplifier (14) of the transmitting unit (8) of the read/write stations (20, 21, 22, 23), **in that**, by interrogating the analysis unit (2) of the read/write station (20, 21, 22, 23), the influencing of the read/write station by the currently set transmission channel and the transmission power of the at least one active read/write station is determined, **in that**, on the basis thereof, for the read/write station (20, 21, 22, 23), the transmission power and the transmission channel which reduce mutual interference between the read/write stations (20, 21, 22, 23) to a minimum are detected, and **in that** this transmission channel and the transmission power are set.

12. A method of detecting and setting a transmission channel by means of read/write stations of an RFID system with the features according to claim 1, **characterised in that** the evaluation and control unit (9) of a read/write station (20, 21, 22, 23) controls a frequency transmitter (13) and a power amplifier (14) of the transmitting unit (8) of a read/write station (20, 21, 22, 23), **in that**, by interrogating the analysis unit (2) of the read/write station (20, 21, 22, 23), the influencing of the read/write station by the currently set transmission channel and the transmission power of the at least one active read/write station is determined, and **in that**, on the basis thereof, for the read/write station (20, 21, 22, 23), the transmission power and the transmission channel which reduce mutual interference between the read/write stations (20, 21, 22, 23) to a minimum are detected, and **in that** this transmission channel and this transmission power are set.

## Revendications

1. Poste d'écriture et de lecture d'un système d'identification par radiofréquences, à au moins un canal pouvant être sélectionné dans une bande de fréquences pour une communication entre le poste d'écriture et de lecture et au moins un transpondeur, disposant d'au moins une antenne émettrice et réceptrice (1), qui est reliée à au moins une unité émettrice (8) et au moins une unité réceptrice (7), où la au moins une unité émettrice (8) et la au moins une unité réceptrice (7) sont reliées à au moins une unité-d'évaluation et de commande (9),
**caractérisé en ce que** le poste d'écriture et de lecture dispose d'au moins une unité d'analyse (2) et où la moins une unité d'analyse (2) se présente sous forme d'une unité d'analyse (2) recevant les signaux reçus par l'antenne émettrice et réceptrice (1) dans une bande de fréquences préréglée, les évaluant en termes de fréquence et d'amplitude et transmettant ces signaux évalués à l'unité d'évaluation et de commande (9), et **en ce que** le poste d'écriture et de lecture relève et affiche tous les canaux émetteurs occupés dans une bande de fréquences préréglée, même ceux d'autres postes d'écriture et de lecture.

2. Poste d'écriture et de lecture selon la revendication 1, **caractérisé en ce que** l'unité réceptrice (7) et l'unité d'analyse (2) se présentent sous forme d'unités séparées à l'intérieur de le poste d'écriture et de lecture.

3. Poste d'écriture et de lecture selon la revendication 1, **caractérisé en ce que** l'unité réceptrice (7) se présente également sous forme d'une unité d'analyse (2).

4. Poste d'écriture et de lecture selon l'une des revendications 1 à 3, **caractérisé en ce que** l'unité émettrice (8) dispose d'au moins un variateur de fréquences (13) réglable et d'au moins un amplificateur de puissance (14) pilotable.

5. Poste d'écriture et de lecture selon l'une des revendications 1 à 4, **caractérisé en ce que** le variateur de fréquences (13) et l'amplificateur de puissance (14) de l'unité émettrice (8) ainsi que les unités d'analyse (2) peuvent être pilotés et relevés par une interface (5).

6. Poste d'écriture et de lecture selon la revendication 5, **caractérisé en ce qu'**un dispositif d'affichage externe peut être connecté par l'interface (5).

7. Poste d'écriture et de lecture selon l'une des revendications 1 à 5, **caractérisé en ce qu'**un dispositif d'affichage (6) est intégré.

8. Poste d'écriture et de lecture selon l'une des revendications 1 à 7, **caractérisé en ce que** l'unité d'évaluation et de commande (9) se présente sous forme d'une unité d'évaluation et de commande relevant et pilotant le variateur de fréquences (13) et l'amplificateur de puissance (14) de l'unité émettrice (8) et l'unité d'analyse (2) d'au moins un autre poste d'écriture et de lecture (20, 21, 22, 23).

9. Poste d'écriture et de lecture selon la revendication 1, **caractérisé en ce que** le poste d'écriture et de lecture se présente sous forme d'un poste d'écriture et de lecture effectuant une modification automatique du canal émetteur et/ou de la puissance d'émission.

10. Poste d'écriture et de lecture selon la revendication 1, **caractérisé en ce que** le poste d'écriture et de lecture (20) est relié à une unité de commande (30) et **en ce que** les unités émettrices, réceptrices et d'analyse de poste d'écriture et de lecture (20) de l'unité de commande (30) peuvent être pilotées et relevées.

11. Procédé pour la détermination et le réglage d'un canal émetteur avec des postes d'écriture et de lecture d'un système d'identification par radiofréquences selon la revendication 1, **caractérisé en ce qu'**une unité de commande (30) pilote un variateur de fréquence (13) et un amplificateur de puissance (14) de l'unité émettrice (8) des postes d'écriture et de lecture (20, 21, 22, 23), **en ce que** le relevé de l'unité d'analyse (2) du poste d'écriture et de lecture (20, 21, 22, 23) détermine l'influence du poste d'écriture et de lecture par le canal émetteur actuellement réglé et la puissance d'émission du ou des postes d'écriture et de lecture actifs, **en ce que** cela sert à déterminer la puissance d'émission et le canal émetteur pour le poste d'écriture et de lecture (20, 21, 22, 23), où le brouillage mutuel des postes d'écriture et de lecture (20, 21, 22, 23) est réduit à un minimum, et **en ce que** ce canal émetteur et cette puissance d'émission sont sélectionnés.

12. Procédé pour la détermination et le réglage d'un canal émetteur avec des postes d'écriture et de lecture d'un système d'identification par radiofréquences avec les caractéristiques selon la revendication 1, **caractérisé en ce que** l'unité d'analyse et de commande (9) d'un poste d'écriture et de lecture (20, 21, 22, 23) pilote un variateur de fréquence (13) et un amplificateur de puissance (14) de l'unité émettrice (8) d'un poste d'écriture et de lecture (20, 21, 22, 23), **en ce que** le relevage de l'unité d'analyse (2) du poste d'écriture et de lecture (20, 21, 22, 23) détermine l'influence du poste d'écriture et de lecture par le canal émetteur actuellement réglé et la puissance d'émission de la ou des postes d'écriture et de lecture actives, **en ce que** cela sert à déterminer la puissance d'émission et le canal émetteur pour le poste d'écriture et de lecture (20, 21, 22, 23), où le brouillage mutuel des postes d'écriture et de lecture (20, 21, 22, 23) est réduit à un minimum, et **en ce que** ce canal émetteur et cette puissance d'émission sont sélectionnés.
